# FASCICULE DE BREVET EUROPEEN

(11) **EP 0 710 792 B1**
(45) Date de publication et mention de la délivrance du brevet: **31.03.1999**
(21) Numéro de dépôt: 95402382.6
(22) Date de dépôt: 25.10.1995
(51) Int. Cl.: F16L 3/10, F16L 47/00

(54) **Dispositif de mise en forme d'un conduit en matière plastique ou en matière élastiquement déformable**
Vorrichtung für die Vorverformung eines Rohres aus Kunststoff oder elastisch verformbarem Material
Device for preforming a pipe made of plastics or of elastically deformable material

(30) Priorité: 04.11.1994 FR 9413190
(43) Date de publication de la demande: 08.05.1996
(73) Titulaire: HUTCHINSON, 75008 Paris (FR)
(72) Inventeur: Godeau, Denis, F-45260 Vieilles Maisons (FR); Garcia, Anthony, F-45700 Villemandeur (FR)
(74) Mandataire: Ramey, Daniel

(56) Documents cités:
- FR-A- 1 341 140
- FR-A- 1 559 036
- FR-E- 91 686
- GB-A- 1 009 534
- GB-A- 2 149 000

## Description

L'invention concerne un conduit ou un tuyau en matière plastique ou en matière élastiquement déformable telle qu'un élastomère ou un caoutchouc, du type utilisable en particulier dans l'industrie automobile, associé à un dispositif de mise en forme.

Les conduits ou tuyaux de diamètre relativement important qui sont montés dans les compartiments moteurs des véhicules automobiles, doivent souvent être munis de dispositifs de mise en forme permettant de modifier leur forme en section, notamment dans le sens de l'aplatissement, et/ou leur direction, par exemple pour contourner un obstacle, la nécessité de ces dispositifs étant due pour l'essentiel au manque d'espace disponible dans un compartiment moteur, ce qui oblige à couder et à aplatir certaines parties des conduits ou des tuyaux pour parvenir à les loger aux endroits voulus.

Dans la technique actuelle, ces dispositifs de mise en forme sont surmoulés en matière plastique rigide sur les conduits ou tuyaux, ce qui pose des problèmes qui peuvent être complexes. En effet, des noyaux solides doivent être disposés à l'intérieur des conduits pour le surmculage des dispositifs précités et peuvent être très difficiles à retirer après le surmoulage.

On connaît, par les documents GB-A-2 149 000 et FR-E-91 686, des dispositifs de fixation ou de serrage de câbles ou de conduits qui sont destinés à la fixation des câbles ou des conduits sur des supports, mais qui ne permettent pas de modifier leurs sections transversales.

L'invention a pour but d'apporter une solution simple, efficace et peu coûteuse à ces problèmes.

Elle a pour objet un dispositif de mise en forme d'un conduit ou d'un tuyau, qui puisse être monté à n'importe quel moment sur n'importe quelle partie du conduit ou du tuyau pour modifier sa forme en section transversale et éventuellement sa direction, qui soit également démontable et qui ne nécessite pas l'utilisation d'outils particuliers pour son montage ou son démontage.

Elle propose donc un conduit en matière plastique ou en matière élastiquement déformable, ce conduit ayant en section transversale une certaine forme initiale et étant associé à un dispositif de mise en forme comprenant au moins deux pièces rigides munies de moyens de fixation l'une sur l'autre et destinées à être assemblées autour du conduit en définissant entre elles un logement de réception de ce conduit, ce logement ayant une forme en section transversale différente de la forme initiale en section transversale du conduit et correspondant à une forme désirée de la partie transversale du conduit, de sorte que, quand les pièces sont fixées l'une à l'autre autour du conduit, elles le déforment et lui donnent en section transversale la forme désirée précitée.

Avantageusement, les moyens de fixation des pièces l'une sur l'autre sont des moyens d'accrochage ou d'encliquetage élastique.

Il suffit donc de mettre en place les pièces de part et d'autre du conduit, à l'endroit voulu, et de les fixer l'une à l'autre, notamment par accrochage ou encliquetage élastique, pour mettre en forme la partie correspondante du conduit, c'est-à-dire pour modifier sa forme en section transversale et éventuellement sa direction.

On évite ainsi tous les problèmes liés au surmoulage d'un manchon en matière rigide sur un conduit plus ou moins déformable.

Dans un mode de réalisation préféré de l'invention, les pièces précitées sont des demi-cages constituées de barreaux reliés rigidement entre eux.

Chaque pièce ou demi-cage est de préférence moulée d'une seule pièce en une matière plastique relativement rigide, par exemple en polyamide chargé de fibres de verre.

Enfin, il peut être utile de prévoir sur ces pièces ou demi-cages des moyens de fixation ou de réception d'accessoires tels que des butées d'appui sur un support ou des organes de fixation sur support.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
la figure 1 est une vue schématique en perspective d'une demi-cage d'un dispositif pour mettre en oeuvre l'invention;
la figure 2 est une vue de dessus de cette demi-cage;
la figure 3 est une vue de gauche de cette demi-cage, par rapport à la vue de la figure 2;
les figures 4 et 5 représentent schématiquement les demi-cages de ce dispositif avant leur assemblage, les demi-cages de la figure 4 étant vues en coupe selon la ligne IV-IV de la figure 2, et celles de la figure 5 étant vues en coupe selon la ligne V-V de la figure 2;
la figure 6 est une vue schématique en perspective d'une demi-cage selon une variante de réalisation;
la figure 7 est une vue schématique de dessus de la demi-cage de la figure 6.

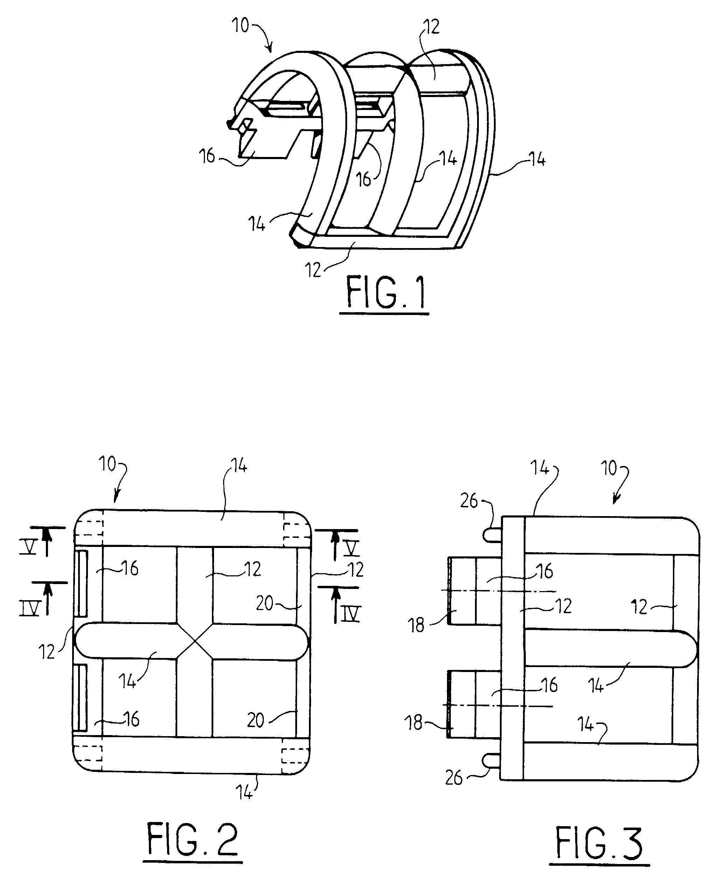

On se réfère d'abord aux figures 1 à 5 qui représentent schématiquement un premier mode de réalisation de l'invention, dans lequel un dispositif de mise en forme d'un conduit ou d'un tuyau en matière plastique, en élastomère ou en caoutchouc, est constitué de deux demi-cages identiques 10 qui peuvent être assemblées l'une à l'autre par accrochage ou encliquetage élastique et qui, lorsqu'elles sont mises en place autour d'un conduit, donnent à ce dernier une forme elliptique en section transversale.

Chaque demi-cage 10 est moulée en matière plastique rigide, telle qu'un polyamide chargé de fibres de verre, et comprend trois barreaux longitudinaux 12 parallèles et rectilignes reliés entre eux par trois barreaux transversaux parallèles 14 ayant la forme d'une demi-ellipse. Les barreaux transversaux 14 sont respectivement aux extrémités et au milieu de la demi-cage 10, et les barreaux longitudinaux 12 relient entre elles les extrémités des barreaux transversaux 14 et les parties médianes de ces barreaux, respectivement.

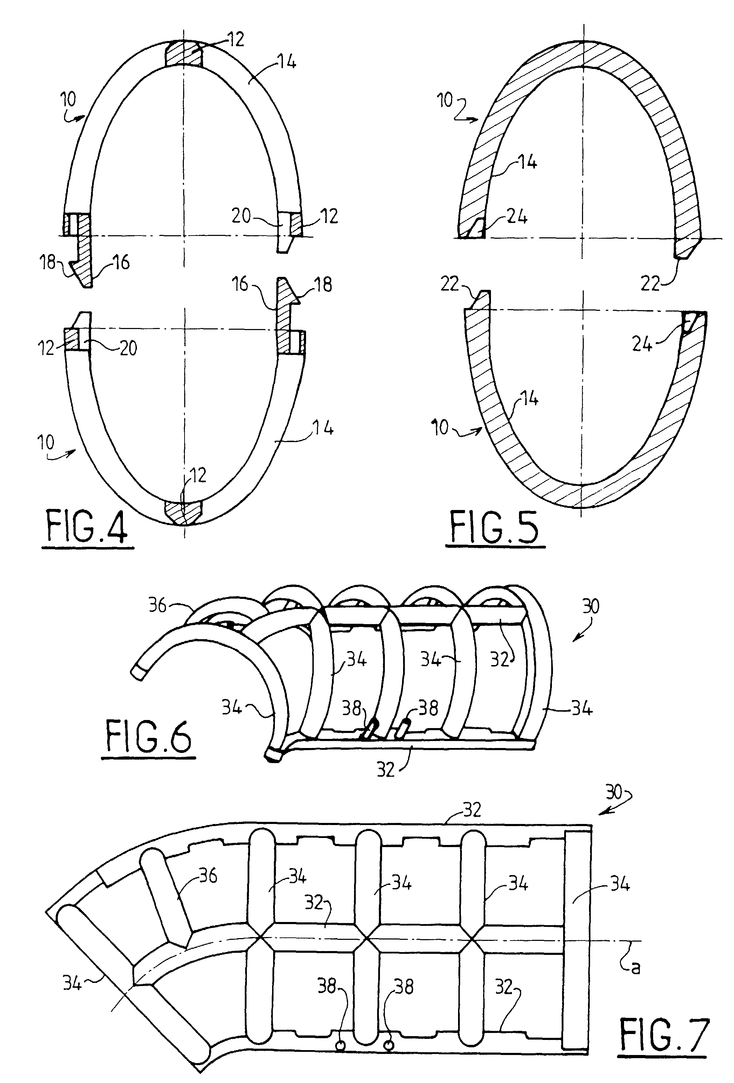

L'un des barreaux longitudinaux 12 reliant les extrémités des barreaux transversaux 14, comprend deux pattes 16 formant crochet qui s'étendent chacune entre deux barreaux transversaux 14 et à l'opposé de ces derniers, tangentiellement à la demi-ellipse définie par la demi-cage 10 comme on le voit bien en figure 4.

Chaque patte 16 comprend un bec 18 en saillie sur sa face extérieure, ce bec 18 ayant une forme de demi-pointe de flèche.

L'autre barreau longitudinal 12 reliant les extrémités des barreaux transversaux 14 de la demi-cage 10 comprend des encoches 20 sur sa face intérieure, ces encoches étant destinées à permettre le passage des pattes 16 et des becs 18 d'une autre demi-cage identique lors de l'assemblage du dispositif.

Les barreaux transversaux 14 d'extrémité de la cage 10 sont quant à eux formés avec une saillie 22 à rampe oblique à l'une de leurs extrémités et avec une encoche 24 de forme correspondante à leur autre extrémité (figure 5). Enfin, des pions 26 de positionnement peuvent être formés aux extrémités de l'un des barreaux longitudinaux 12 d'extrémité (figure 3) pour s'étendre dans le même sens que les pattes 16 tandis que l'autre barreau longitudinal 12 d'extrémité comprend des orifices destinés à recevoir les pions de positionnement 26 d'une autre demi-cage identique.

L'assemblage du dispositif pour la mise en oeuvre de l'invention est des plus simples :
il suffit de disposer deux demi-cages 10 identiques face à face comme représenté en figure 4, les pattes 16 d'une demi-cage se trouvant alignées avec les encoches 20 de l'autre demi-cage et réciproquement, et de pousser les demi-cages l'une vers l'autre pour réaliser automatiquement la fixation des demi-cages l'une sur l'autre par accrochage et encliquetage élastique, les becs 18 des pattes 16 glissant sur les bords des encoches 20 jusqu'à l'encliquetage élastique sur les barreaux 12.

Un conduit à section transversale circulaire qui se trouve entre les demi-cages 10 prend alors la forme elliptique définie par ces demi-cages assemblées l'une à l'autre. Les demi-cages sont réalisées en une matière suffisamment rigide et résistante mécaniquement pour conserver leur forme dans le cas où la pression à l'intérieur du conduit devient nettement supérieure à la pression ambiante.

Le dispositif est démontable sans difficulté : il suffit de repousser les pattes 16 vers l'intérieur et de tirer sur les demi-cages 10 pour les écarter l'une de l'autre.

Le dispositif des figures 6 et 7 diffère de celui qui vient d'être décrit en ce qu'il permet, non seulement de modifier la forme en section transversale du conduit sur lequel il est monté, mais également de modifier la direction de ce conduit, par exemple en le coudant à 45°.

Ce dispositif comprend donc, comme le précédent, deux demi-cages 30 identiques ou sensiblement identiques, réalisées en matière plastique moulée et constituées de barreaux longitudinaux 32 parallèles reliés entre eux par des barreaux transversaux 34 de forme semi-elliptique, les barreaux longitudinaux 32 étant rectilignes sur une partie de leur longueur et incurvés en arc de cercle au voisinage d'une de leurs extrémités, de telle sorte qu'un barreau transversal 34 situé à une extrémité de la demi-cage est incliné de 45°, par exemple, par rapport au barreau transversal 34 situé à l'autre extrémité de la demi-cage.

Les barreaux longitudinaux 32 sont parallèles à l'axe longitudinal de symétrie a du dispositif, tandis que les barreaux transversaux 34 s'étendent dans des plans perpendiculaires à cet axe.

Pour renforcer la demi-cage, un demi-barreau transversal 36 en quart d'ellipse est prévu entre les deux barreaux transversaux 34 qui relient entre elles les parties incurvées des barreaux longitudinaux 32, ce demi-barreau transversal 36 s'étendant entre le barreau longitudinal 32 situé radialement le plus à l'extérieur par rapport au centre de courbure des extrémités incurvées des barreaux 32, et le barreau longitudinal 32 reliant le milieu des barreaux transversaux 34.

La variante de réalisation des figures 6 et 7 diffère encore de celle des figures 1 à 5 en ce qu'elle comprend une demi-cage du type mâle comprenant des moyens d'accrochage ou d'encliquetage élastique tels que les pattes 16 du mode de réalisation précédent, l'autre demi-cage étant du type femelle et comportant les encoches qui vont recevoir ces moyens d'accrochage ou d'encliquetage élastique, la demi-cage 30 représentée aux figures 6 et 7 étant du type femelle.

En outre, cette demi-cage 30 comprend des pions 38 formés en saillie sur l'un des barreaux longitudinaux 32, pour recevoir par exemple un patin en caoutchouc qui servira de butée d'appui sur un support.

On peut bien entendu prévoir sur les demi-cages 10 ou 30 d'autres moyens appropriés de fixation ou d'accrochage d'organes de butée ou de fixation sur des supports.

Dans les deux modes de réalisation qui viennent d'être décrits, les faces des barreaux 12, 14, 32, 34 qui sont tournées vers l'intérieur des demi-cages sont sensiblement planes ou légèrement incurvées et tangentielles à la surface de section elliptique définie par les demi-cages.

Le nombre de barreaux, leurs dimensions, leur matière dépendent des contraintes que les dispositifs selon l'invention devront supporter. Il en va de même pour le nombre et les dimensions des moyens d'accrochage ou d'encliquetage élastique.

De façon générale, l'invention permet une mise en forme simple, rapide et fiable d'un conduit ou tuyau en matière plastique ou en matière élastiquement déformable, au moyen d'un dispositif qui est montable et démontable sans outils particuliers.

Bien entendu, les demi-cages qui viennent d'être décrites peuvent être remplacées par des demi-coquilles à parois pleines ou plus ou moins ajourées. De même, le dispositif selon l'invention peut être constitué par l'assemblage et la fixation de plus de deux pièces, et il peut être conçu pour modifier plusieurs fois la forme et éventuellement la direction d'un conduit, par exemple pour donner une forme en S ou en U à une partie de conduit, si besoin est.

## Revendications

1. Conduit en matière plastique ou en matière élastiquement déformable, ce conduit ayant en section transversale une certaine forme initiale et étant associé à un dispositif de mise en forme comprenant au moins deux pièces rigides (10, 30) munies de moyens (16, 18, 20) de fixation l'une sur l'autre et destinées à être assemblées autour du conduit en définissant entre elles un logement de réception de ce conduit, ce logement ayant une forme en section transversale différente de la forme initiale en section transversale du conduit et correspondant à une forme désirée de la partie transversale du conduit, de sorte que, quand les pièces (10, 30) sont fixées l'une à l'autre autour du conduit, elles le déforment et lui donnent en section transversale la forme désirée précitée.

2. Conduit selon la revendication 1, caractérisé en ce que les moyens de fixation des pièces (10, 30) sont des moyens (16, 18, 20) d'accrochage ou d'encliquetage élastique.

3. Conduit selon la revendication 1 ou 2, caractérisé en ce que les pièces précitées sont des demi-cages (10, 30) constituées de barreaux (12, 14, 32, 34) reliés rigidement entre eux.

4. Conduit selon l'une des revendications précédentes, caractérisé en ce que chaque pièce ou demi-cage précitée est moulée d'une seule pièce en matière plastique rigide.

5. Conduit selon la revendication 4, caractérisé en ce que ladite matière plastique est un polyamide chargé de fibres de verre.

6. Conduit selon l'une des revendications précédentes, caractérisé en ce que les pièces ou demi-cages (10, 30) précitées comprennent des moyens (38) de fixation ou de réception d'accessoires tels que des butées d'appui sur un support ou des organes de fixation sur un support.

7. Conduit selon l'une des revendications précédentes, caractérisé en ce que le dispositif de mise en forme est à section elliptique.

8. Conduit selon l'une des revendications précédentes, caractérisé en ce que le dispositif de mise en forme a une forme générale incurvée correspondant à au moins un changement de direction du conduit.

9. Conduit selon l'une des revendications précédentes, caractérisé en ce que les pièces ou demi-cages (10, 30) précitées sont formées de barreaux longitudinaux (12) parallèles à l'axe longitudinal du dispositif et de barreaux transversaux incurvés (14, 34) sensiblement perpendiculaires à cet axe.

## Patentansprüche

1. Rohr aus Kunststoff oder elastisch verformbaren Material, wobei dieses Rohr im Querschnitt eine gewisse anfängliche Form hat und mit einer Vorrichtung zum Formen verbunden wird, die wenigstens zwei starre Teile (10, 30) umfaßt, welche mit Mitteln (16, 18, 20) zur Befestigung des einen auf dem anderen versehen und dazu bestimmt sind, um die Leitung zusammengebaut zu werden, indem sie zwischen sich eine Unterbringung für die Aufnahme dieses Rohrs abgrenzen, wobei diese Unterbringung eine Querschnittsform hat, die unterschiedlich von der anfänglichen Querschnittsform des Rohrs ist und einer gewünschten Form des Querteils des Rohrs entspricht, derart, daß, wenn die Teile (10, 30) eins mit dem anderen um das Rohr befestigt werden, sie dasselbe verformen und ihm im Querschnitt die gewünschte vorgenannte Form geben.

2. Rohr gemäß Anspruch 1, dadurch **gekennzeichnet**, daß die Mittel für die Befestigung der Teile (10, 30) Mittel (16, 18, 20) des Verhakens oder der elastischen Verklinkung sind.

3. Rohr gemäß Anspruch 1 oder 2, dadurch **gekennzeichnet**, daß die vorgenannten Teile Halbkäfige (10, 30) sind, die von Stäben (12, 14, 32, 34) gebildet sind, welche starr miteinander verbunden sind.

4. Rohr gemäß einem der vorhergehenden Ansprüche, dadurch **gekennzeichnet**, daß jedes Teil oder jeder vorerwähnte Halbkäfig aus einem einzigen Stück aus starrem Kunststoff geformt ist.

5. Rohr gemäß Anspruch 4, dadurch **gekennzeichnet**, daß der genannte Kunststoff ein Polyamid ist, das von Glasfasern durchsetzt bzw. mit Glasfasern beladen ist.

6. Rohr gemäß einem der vorhergehenden Ansprüche, dadurch **gekennzeichnet**, daß die vorerwähnten Teile oder Halbkäfige (10, 30) Mittel (38) für die Befestigung oder die Aufnahme von Zubehör, wie Anschläge bzw. Widerlager für die Abstützung bzw. Auflage auf einem Träger oder Organe für die Befestigung auf einem Träger umfassen.

7. Rohr gemäß einem der vorhergehenden Ansprüche, dadurch **gekennzeichnet**, daß die Vorrichtung zum Formen von elliptischem Querschnitt ist.

8. Rohr gemäß einem der vorhergehenden Ansprüche, dadurch **gekennzeichnet**, daß die Vorrichtung zum Formen eine generell gekrümmte Form hat, die wenigstens einer Richtungsänderung des Rohrs entspricht.

9. Rohr gemäß einem der vorhergehenden Ansprüche, dadurch **gekennzeichnet**, daß die vorgenannten Teile oder Halbkäfige (10, 30) von Längsstäben (12), die parallel zur Längsachse der Vorrichtung sind, und gekrümmten Querstäben (14, 34), die im wesentlichen senkrecht zu dieser Achse sind, gebildet sind.

## Claims

1. Conduit made of a plastics or elastically deformable material, this conduit having a certain initial cross-sectional shape and being associated with a shaping device comprising at least two rigid pieces (10, 30) equipped with means (16, 18, 20) for fixing one piece to the other and intended to be assembled around the conduit defining between them a housing for receiving this conduit, this housing having a cross-sectional shape different from the initial cross-sectional shape of the conduit and corresponding to a desired shape of the transverse part of the conduit, so that, when the pieces (10, 30) are fixed to one another around the conduit, they deform it and give it the aforementioned desired cross-sectional shape.

2. Conduit according to Claim 1, characterized in that the means for fixing the pieces (10, 30) are catch or snap-in means (16, 18, 20).

3. Conduit according to Claim 1 or 2, characterized in that the aforementioned pieces are half-cages (10, 30) consisting of rigidly interconnected bars (12, 14, 32, 34).

4. Conduit according to one of the preceding claims, characterized in that each aforementioned piece or half-cage is moulded in a single piece of rigid plastics material.

5. Conduit according to Claim 4, characterized in that the said plastics material is a glass-fibre-reinforced polyamide.

6. Conduit according to one of the preceding claims, characterized in that the aforementioned pieces or half-cages (10, 30) comprise means (38) for fixing or receiving accessories such as abutments for bearing on a support or members for fixing to a support.

7. Conduit according to one of the preceding claims, characterized in that the shaping device is of elliptical section.

8. Conduit according to one of the preceding claims, characterized in that the shaping device has a generally curved shape corresponding to at least one change of direction of the conduit.

9. Conduit according to one of the preceding claims, characterized in that the aforementioned pieces or half-cages (10, 30) are formed of longitudinal bars (12) parallel to the longitudinal axis of the device and of curved transverse bars (14, 34) substantially perpendicular to this axis.
